(19) **Europäisches Patentamt European Patent Office Office européen des brevets**

(11) **EP 1 905 024 B1**

(12) **EUROPEAN PATENT SPECIFICATION**

(45) Date of publication and mention
of the grant of the patent:
**29.10.2008 Bulletin 2008/44**

(51) Int Cl.:
*G11B 7/095* (2006.01)    *G11B 7/12* (2006.01)
*G11B 7/135* (2006.01)

(21) Application number: **06765931.8**

(22) Date of filing: **28.06.2006**

(86) International application number:
**PCT/IB2006/052159**

(87) International publication number:
**WO 2007/004141 (11.01.2007 Gazette 2007/02)**

(54) **OPTICAL PICK-UP AND/OR RECORDING DEVICE**

OPTISCHE AUFNAHME- UND/ODER AUFZEICHNUNGSVORRICHTUNG

DISPOSITIF DE LECTURE ET/OU D'ENREGISTREMENT OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.07.2005 EP 05106048**

(43) Date of publication of application:
**02.04.2008 Bulletin 2008/14**

(73) Proprietor: **Koninklijke Philips Electronics N.V.
5621 BA Eindhoven (NL)**

(72) Inventors:
• **ZIJP, Ferry
  NL-5656 AA Eindhoven (NL)**
• **VERSCHUREN, Coen, A.
  NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**JP-A- 2006 004 596          US-A1- 2004 047 271
US-A1- 2005 259 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 1 905 024 B1**

**Description**

FIELD OF THE INVENTION

The present invention relates to an optical pick-up and/or recording device for a near field optical storage system. More particularly, the present invention relates to an optical pick-up and/or recording device for two-dimensional optical data storage for applications such as an optical disc.

BACKGROUND of the invention

State of the art document Optical Data Storage 2004, F. Zijp et al., Proceedings of SPIE Vol. 5380, pp. 209 to 223, describes a near field system. Thereby, a near field read-out of a 50 GB first-surface disc with a very high numerical aperture of 1.9 is proposed. The known near field system comprises a moving mechanism adapted to vary a distance between a front surface of a solid immersion lens and a surface of a compact disc. Thereby, for read-out operations the solid immersion lens is positioned at a constant distance that lies within the evanescent decay distance of a part of the focused electromagnetic field, typically less than 10 percent of the wavelength of the laser beam. In the known system, this distance is about 25 nm. To allow an air gap control with a mechanical actuator at such small distances, a gap error signal is obtained from the reflected light with a polarization state perpendicular to that of the main beam that is focused on the disc.

The near field system known has the disadvantage that an alignment of the lens with respect to the surface of the disc requires a tedious trial-and-error method. This requires a lot of effort and time involved.

Prior art US 2004/047271 discloses an optical pick up according to the preamble of appended claim 1.

SUMMARY OF THE INVENTION

It is an object of the invention to provide an optical pick-up and/or recording device with an improved efficiency, especially with an improved performance for reading and/or writing of data.

This object is solved by an optical pick-up and/or recording device as defined in claim 1. Advantageous developments of the invention are mentioned in the dependent claims.

It is to be noted that the storage medium is not necessarily a part of the optical pick-up and/or recording device as claimed. The optical pick-up and/or recording device can be sold without a storage medium. Further, a storage medium can be temporarily used or different storage media can be used together with the optical pick-up and/or recording device.

The present invention has the advantage that an accurate alignment of the lens element with respect to the storage medium can be achieved and maintained. Such an alignment can be performed for each disc automatically at least once and possibly even dynamically during operation. Further, a control loop with suitable means for adjusting the lens tilt with respect to the disc or vice versa can then be used to maintain a constant and parallel air gap between the lens element and the recording medium. Therewith, the performance of reading and/or writing operations is increased and the reliability of the optical pick-up and/or recording device is high.

The inclination determination unit not necessarily determines the inclination in minutes or degrees or another unit. The inclination determination unit can determine the inclination with respect to an ordinal scale or a cardinal scale.

According to the measure as defined in claim 3 an alignment is achieved which is preferred for a lot of applications. According to the measure as defined in claim 2 the lens element is aligned with respect to a direction. When this direction is a tangential direction, as claimed in claim 4, this has the advantage that the lens element is aligned with respect to a track of the storage medium. The measures as defined in claim 5 has the advantage that the alignment is also achieved with respect to a radial direction, that is a direction perpendicular to a track of the storage medium.

It is possible to use a light path with polarizing optics suitable for generating multiple versions of a gap signal with multiple auxiliary beams, possibly generated by a weak diffraction phase grating, to generate at least two but preferably three or more spots that sense the air gap size at the respective off-axis points. By comparing the gap error signal from a number of off-axis points the disc tilt with respect to the lens can be measured. Thereby, one of the gap signals can be derived from the main beam.

It is advantageous that two of such spots are arranged at least nearly on an actual track of the storage medium, whereby the spots are different from each other, and a third spot is arranged besides the actual track. Therewith, the inclination between the lens element and the recording medium can be determined in both the radial and the tangential direction. For an increased accuracy, it is advantageous to use four or more reflected beams.

According to the measure as defined in claim 8 the intensity of each of the reflected beams is measured separately. Thereby it is advantageous to make use of multiple detector elements as defined in claim 9. Further, it is possible that only one of the reflected beams is directed to the detector element, while the other reflected beams are blocked. Alternatively, an auxiliary beam is directed towards the storage medium in different directions to generate the reflected beams one after another.

The measure as defined in claim 10 has the advantage that the accuracy of the alignment is further increased. Thereby, the values of the standard gap signal can be determined by an individual measurement for the specific optical pick-up and/or recording device.

According to the measure as defined in claims 12 and 13 a ordinal characteristic is provided so as to control the moving mechanism. A closed-loop control can be provided for tilt correction. Therewith, the computational burden is reduced.

These and other aspects of the invention will be apparent from and elucidated with reference to the embodiments described hereinafter.

BRIEF DESCRIPTION OF THE DRAWINGS

The present invention will become readily understood from the following description of preferred embodiments thereof made with reference to the accompanying drawings, in which like parts are designated by like reference signs and in which:

Fig. 1 shows an optical pick-up and/or recording device according to a first embodiment of the present invention;
Fig. 2 shows a graph illustrating the amplitude of the gap signal in dependence of an air gap distance;
Fig. 3 shows an extract of a schematic recording medium in top view to illustrate the present invention;
Fig. 4 shows an extract of the air gap interface between the lens element and the storage medium; and
Fig. 5 shows an optical pick-up and/or recording device according to a second embodiment of the present invention.

DESCRIPTION OF THE PREFERRED EMBODIMENTS

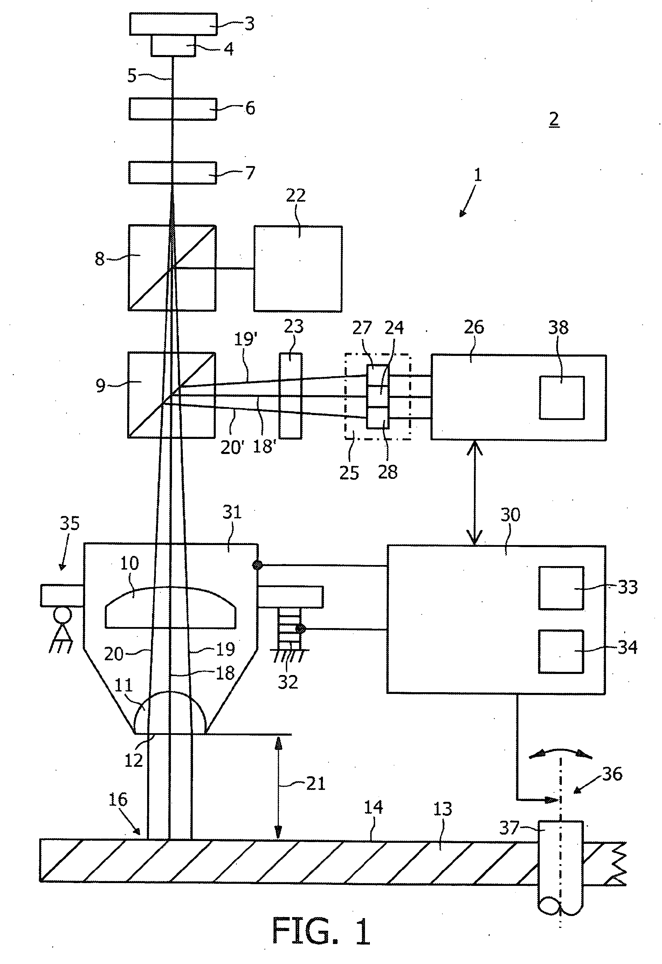

Fig. 1 shows an optical pick-up and/or recording device 1 according to a first embodiment of the invention. The optical pick-up and/or recording device 1 can be used in an optical storage system, especially for two-dimensional optical data storage and three-dimensional holographic storage. The optical storage system can use a two-dimensional optical data storage disc, a storage medium for holographic storage or another optical storage medium. But, the optical pick-up and/or recording device 1 is not limited to this mentioned data storage systems and can also be used in other applications. The optical pick-up and/or recording device 1 of the first embodiment of the invention comprises an optical head. It may be possible that some elements of the optical pick-up and/or recording device 1 are not located on the optical head, but somewhere else in the optical storage system, for example at a main board.

The optical pick-up and/or recording device 1, as shown in Fig. 1, comprises a radiation emitting element 3. The radiation emitting element 3 comprises a semiconductor laser 4 and can comprise further elements such as lenses. The radiation emitting element 3 is emitting a radiation beam 5. The radiation beam 5 can comprise an elliptical beam profile and is input to a beam shaper element 6 for shaping the radiation beam 5 emitted from the radiation emitting element 3 in a radiation beam 5 with a circular beam profile. The radiation beam 5 output from the beam shaper element 6 has an aspect ratio of at least nearly 1. The beam shaper element 6 can comprise further elements such as a collimating element to collimate the radiation beam 5 and to create a specific intensity profile of the radiation beam 5.

The optical pick-up and/or recording device 1 comprises a light path direction element 7. The light path direction element 7 can comprise or be built up by a diffraction grating 7. More particularly, the diffraction grating 7 is a weak one-dimensional or two-dimensional diffraction phase grating 7. The radiation beam 5 output from the beam shaper element 6 passes through the diffraction grating 7. Thereby, the diffraction grating 7 produces diffraction orders, some of which are located off-axis. The diffraction grating 7 may for example produce diffractions of the order -1, 0, and +1. The radiation beams from the diffraction grating 7 are then input to a non-polarizing beam splitter 8. Further, the radiation beams pass through a polarizing beam splitter 9 and propagate towards a converging lens 10. After passing through the converging lens 10 the radiation beams propagate towards a lens element 11. As shown in Fig. 1, the lens element 11 is a hemispherical solid immersion lens 11. But, the lens element 11 can also be built-up or comprise an aplanatic super-hemispherical solid immersion lens or a solid immersion lens formed in another way, or a device with a numerical aperture larger than 1, especially a solid immersion mirror.

The lens element 11 comprises a front surface 12 directed towards a surface 14 of a storage medium 13. The front surface 12 of the lens element 11 is at least nearly flat and is orientated at least approximately parallel to the surface 14 of the storage medium 13. More particularly, the front surface 12 of the lens element 11 has a conical shape with a very small flat tip. The surface 14 of the storage medium 13 is at least nearly flat. More particularly, the front surface 12 of the lens element 11 is orientated at least approximately parallel to the surface 14 of the storage medium 13 in an area 16, when the surface 14 comprises some deformations and is therefore not flat.

The polarizing optics shown in Fig. 1 generates a radiation beam (main beam) 18 of zeroth diffraction order and auxiliary radiation beams 19, 20. Each of the auxiliary radiation beams 19, 20 has a diffraction order that is different from the zeroth diffraction order.

For pick-up and recording operations the optical pick-up and/or recording device 1 operates in a mode known as frustrated total internal reflection (FTIR). In this mode, a mean distance 21 between the front surface 12 of the lens element 11 and the surface 14 of the storage medium 13 lies within the evanescent decay distance, which is typically less than 10 percent of the wavelength of the radiation beam 5. For example, the mean distance 21 is then of the order of 10 nm, especially 25 nm. It may be noted that the lens element 11 has a very high numerical aperture. This numerical aperture is greater than 1 and can lie, for example, within a range from 1.5 to 1.9. The radiation beam 18 is not necessarily focused exactly onto the surface 14 of the storage medium 13. For example, the storage medium 13 can comprise one or more layers arranged under the surface 14 of the storage medium 13. The converging lens 10 is moveable for focus adjustment.

Each of the radiation beams 18, 19, 20 becomes elliptically polarized after reflection at the described interface between the lens element 11, the surface 14 of the storage medium 13 and the air gap between. Each of the reflected radiation beams is split up by the polarizing beam splitter 9. Thereby, the polarizing beam splitter 9 is arranged to split up each of the reflected radiation beams in a component 18', 19' or 20' with a polarization state perpendicular to that of the radiation beam 18, 19, 20, respectively. A part of the other component of each of the reflected radiation beams with a polarization state parallel to that of the radiation beams 18, 19, 20, respectively, is directed to a data processing unit 22 by means of the non-polarizing beam splitter 8. The data processing unit 22 is arranged for analyzing the component of the reflected radiation beam 18 with parallel polarization and to output a data signal containing the data read-out from the storage medium 13. Further, the data processing unit 22 can be arranged to derive a tracking error signal for push and pull operations to follow the track on the storage medium 13. The data processing unit 22 can also make use of the components of the reflected auxiliary radiation beams 19, 20 with parallel polarization. For example, when the auxiliary radiation beams 19, 20 are aligned in a tangential direction of the storage medium 13 and are properly positioned with respect to the data tracks on the disc, their components with parallel polarization may be used to generate a push-pull signal and for radial cross-talk cancellation or for bit detection of a two-dimensional channel code.

The reflected beam 18' is focused by a converging lens on a detector element 24 of a beam intensity measuring unit 25. The detector element 24 of the beam intensity unit 25 measures the actual intensity of the reflected beam 18'. Further, the beam intensity unit 25 samples the reflected beam 18' and outputs an electrical gap signal over a line to an inclination determination unit 26. The reflected beam 19' is focused on a detector element 27, and the beam intensity unit 25 outputs an electrical gap signal over a line to the inclination determination unit 26, wherein the gap signal depends on the actual intensity of the reflected beam 19'. A further gap signal sent to the inclination determination unit 26 based on the reflected beam 20' is measured accordingly, wherein the reflected beam 20' is focused on a detector element 28. The detector elements 24, 27, 28 of the beam intensity unit 25 are arranged separate from each other. Hence, each of the detector elements 24, 27, 28 detects only one of the reflected beams 18', 19', 20'.

The inclination determination unit 26 is connected with a control unit 30. The control unit 30 is adapted to control a moving mechanism 31 and especially an actuator element 32 of the moving mechanism 31.

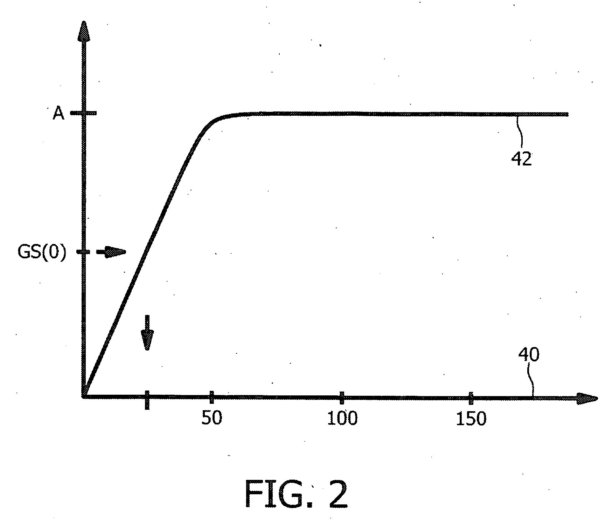

It is to be noted that each of the gap signals input to the inclination determination unit 26 is generated from the low frequency part, for example 0 to 100 kHz, of the reflected beam 18', 19' or 20' with a polarization state perpendicular to that of the main radiation beam 5 that is focused on the optical storage medium 13. The amplitude of the reflected beam 18', 19' or 20' depends on the distance 21, as described in further detail with reference to Fig. 2.

The gap signal based on the reflected beam 18' passes through the inclination determination unit 26 and is input to the control unit 30. The control characteristic of the control unit 30 is preset and can be adjusted by a set point stored in a memory 33 and a gain value stored in a memory 34. The control unit 30 is adapted to control the moving mechanism 31, wherein the moving mechanism 31 varies the distance 21 by moving the lens element 11 and the converging lens 9 towards or away from the surface 14 of the storage medium 13. Alternatively or in addition, the moving mechanism 31 can also move the storage medium 13 towards or away from the front surface 12 of the lens element 11. Further, the moving mechanism 31 provides a tilt mechanism 35 actuated by the actuator element 32 to vary an inclination of the front surface 12 of the lens element 11 relative to the surface 14 of the storage medium 13 in at least one direction. A further tilt mechanism 36 of the moving mechanism 31 is arranged to tilt a rotating shaft 37 to tilt the storage medium 13 in at least one direction.

Therefore, the moving mechanism 31 can vary the relative orientation and the distance 21 between the front surface 12 of the lens element 11 and the surface 14 of the storage medium 13. A parallel orientation of the front surface 12 of the lens element 11 with respect to the surface 14 of the storage medium 13 is necessary for a reliable operation. Hence, before or during operation the front surface 12 and the surface 14 are at least once orientated in parallel. However, it may be noted that the alignment of the front surface 12 of the lens element 11 with respect to the surface 14 of the storage medium 13 is performed in view of a high performance for read-out or writing operations so that the reliability of the optical pick-up and/or recording device 1 is high. Such an alignment will not necessarily result in an exact parallel orientation between the front surface 12 of the lens element 11 and the surface 14 of the storage medium 13.

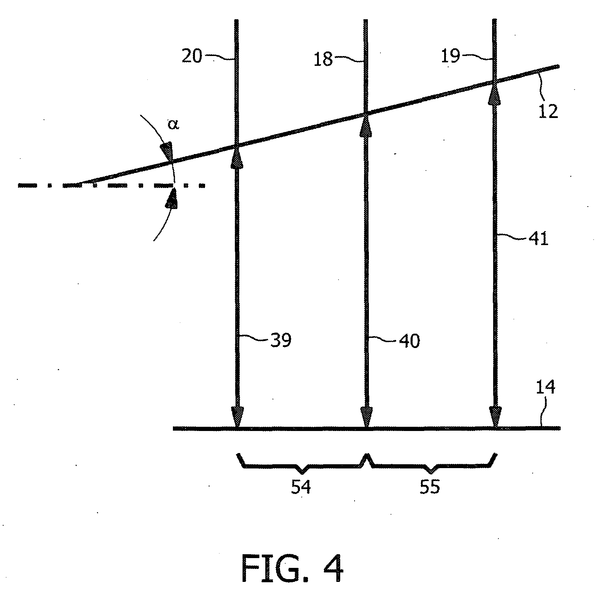

The actual inclination of the front surface 12 of the lens element 11 relative to the surface 14 of the storage medium 13 is determined by the inclination determination unit 26. Therefore, the inclination determination unit 26 makes use of the gap signals measured from all reflected beams 18', 19', 20'. This determination is described in further detail with reference to Fig. 4. The inclination determined can be described by first tilt angle $\alpha$ and a second tilt angle $\beta$, or, as an approximation, only by a single tilt angle $\alpha$. It is to be noted that it is advantageous, but not necessary, that the tilt angles are defined with respect to directions that are perpendicular to each other. Further, it is to be noted that the tilt angles can vary, especially when the surface 14 is wavy. In such a case a tracking can be provided.

The inclination determination unit 26 comprises a standard gap signal storage medium 38 adapted to provide a few values or a waveform of a standard gap signal showing the dependency of the intensity of one of the reflected beams 18', 19', 20' reflected at the gap between the front surface 12 of the lens element 11 and the surface 14 of the storage medium 13 from a gap distance 39, 40 or 41 (Fig. 4). The standard gap signal storage medium 38 can provide a mean reference for all reflected beams 18', 19', 20', or an individual reference for each of the reflected beams 18', 19', 20', or a multidimensional reference, for example a multidimensional array, for combinations of values of the reflected beams 18', 19', 20' to take care of a deviation from the case of a frustrated internal reflection without an inclination, resulting from "frustrated internal reflection with inclination".

The inclination determination unit 26 determines an actual gap distance 39, 40 or 41 from the actual amplitude of the reflected beam 18', 19', 20', respectively. The determination of the actual gap distance 39, 40 or 41 is described in the following with reference to Fig. 2.

Fig. 2 shows a graph illustrating the dependence of an amplitude (magnitude) of the gap signal in dependence of the actual distance 40 (Fig. 4) between the front surface 12 of the lens element 11 and the surface 14 of the storage medium 13 in the area 16. The gap distance 40 is determined for the reflected beam 18'. The gap distance 39 for the reflected beam 20' and the gap distance 41 for the reflected beam 19' are determined accordingly. In Fig. 2, the distance 40 is shown on the horizontal axis and the amplitude of the gap signal is shown on the vertical axis. As an example, but not limiting the present invention, the gap distance 40 is shown in units of nanometers. In the shown example, starting with a gap distance 40 of (nearly) 0 nm, the amplitude of the gap signal, as shown by the line 42, increases at least nearly linear until it reaches the maximum amplitude A. This maximum amplitude A is reached for a gap distance 40 of nearly 50 nm. When the gap distance 40 further advances, the amplitude of the gap signal is at least nearly constant and stays at the maximum amplitude A.

When the actual amplitude of the gap signal for the reflected beam 18' is GS(0), then the actual distance 40 is determined to 25 nm. This determination is illustrated by the two arrows shown in Fig. 2. Thereby, GS(0) means gap signal for the reflected beam 18' based on the radiation beam 18 of zeroth order diffraction.

The actual amplitude of the gap signal of the reflected beam 20' based on the radiation beam 20 of diffraction order -1 is denoted GS(-1) and the amplitude of the gap signal of the reflected beam 19' based on the radiation beam 19 of diffraction order +1 is denoted GS(+1). Hence, the inclination determination unit 26 determines the distance 39, the distance 40 and the distance 41 from the actual amplitude GS(-1), the actual amplitude GS(0) and the actual amplitude GS(+1), respectively.

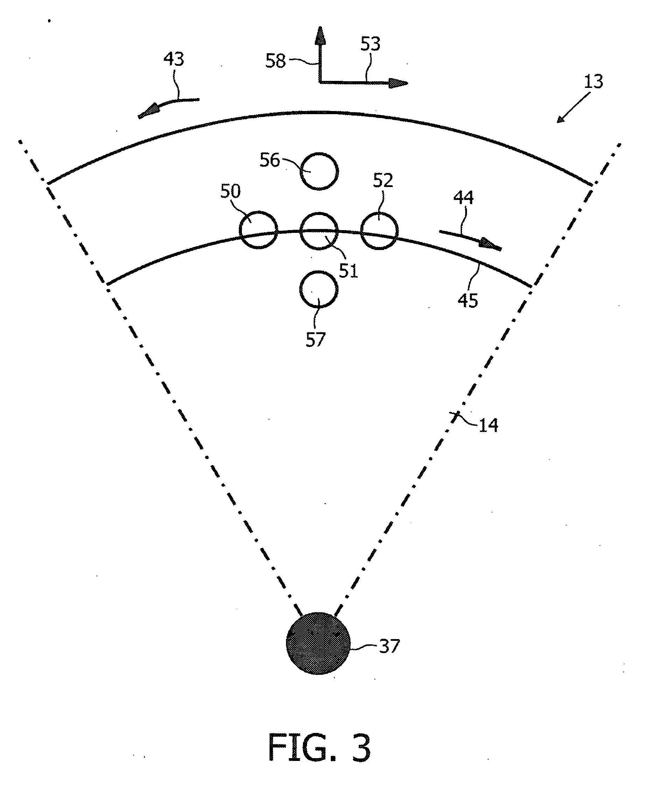

Fig. 3 shows an extract of a storage medium 13. The storage medium 13 is mounted on the rotating shaft 37 so that the storage medium 13 is rotated in a direction 43. The direction 44 for read-out or recording is opposite to the direction 43. The storage medium 13 comprises a plurality of tracks, from which a track 45 is shown in Fig. 3. The radiation beam 20 produces a spot 50 on the surface 14 of the storage medium 13, the radiation beam 18 produces a spot 51 on the surface 14 of the storage medium 13, and the radiation beam 19 produces a spot 52 on the surface 14 of the storage medium 13, when a storage medium 13 is present and the distance 21 lies within the evanescent decay distance of at least a part of the focused electromagnetic field. The actual read-out or recording position on the track 45 is thereby defined by the spot 51. The spots 50, 51, 52 are arranged in a line. Further, the spots 50, 51, 52 are arranged in a tangential direction 53. Hence, from the distances 39, 40, 41 determined by the inclination determination unit 26 the inclination of the front surface 12 of the lens element 11 with respect to the surface 14 of the storage medium 13 can be determined in the tangential direction 53. This determination is illustrated with reference to Fig. 4 in the following.

Fig. 4 illustrates the determination of the inclination between the front surface 12 of the lens element 11 and the surface 14 of the storage medium 13 in the tangential direction 53. The front surface 12 of the lens element 11 is shown by a straight line and the surface 14 of the storage medium 13 is also shown as a straight line for the sake of illustration.

The front surface 12 is inclined with respect to the surface 14 so that the gap distance 39 is smaller than the gap distance 40, and the gap distance 41 is greater than the gap distance 40. The mean distance 21 is the mean of the distances 39, 40, 41 and equals at least nearly the distance 40. A distance 54 between the spot 50 of the beam 20 and the spot 51 of the beam 18 is preset in the inclination determination unit 26. Further, a distance 55 between the spot 51 of the radiation beam 18 and the spot 52 of the radiation beam 19 is preset in the inclination determination unit 26. The angle $\alpha$ of inclination in the tangential direction 53 is calculated by the inclination determination unit 26 as the tangent of a fraction value consisting of a numerator that is the difference between the gap distance 40 and the gap distance 39 and a denominator that is the distance 54. Hence, the inclination angle $\alpha$ in the tangential direction 53 can be calculated by two of the distances 39, 40, 41. A further value for the inclination angle $\alpha$ can be calculated from the distances 40, 41, 55, accordingly. To increase the accuracy, a mean value of the determined angles $\alpha$ can be calculated, or another approximation method can be used The inclination determination unit 26 is adapted to perform those calculations and to generate an inclination signal $\alpha'$. The actual amplitude of the inclination signal $\alpha'$ generated can show at least nearly the actual inclination angle $\alpha$ of inclination between the front surface 12 of the lens element 11 and the surface 14 of the storage medium 13 in units of minutes or degrees, for example.

Alternatively, it is possible to calculate a normalized inclination signal $\alpha'$ for the angle $\alpha$ of inclination in the tangential direction 53 directly from the measured amplitudes of the gap signals. When the distance 54 equals the distance 55, the normalized inclination signal angle $\alpha'$ can be derived as follows. First, the inclination determination unit 26 calculates a ratio $\gamma$ from the intensities of the zeroth, first and minus first order diffracted radiation beams 18, 20, 19 as a fraction value consisting of a numerator that is the amplitude GS(0) of the reflected beam 18' and a denominator that is the mean of the amplitude GS(-1) of the gap signal of the radiation beam 20' and the amplitude GS(-1) of the gap signal of the radiation beam 19'.

$$\gamma = GS(0)/(GS(-1)/2 + GS(+1)/2)$$

Then the normalized inclination signal $\alpha'$ for the angle $\alpha$ is calculated by the inclination determination unit 26 as a fraction value consisting of a numerator that is the product of the ratio $\gamma$ and the difference of the amplitude GS(+1) of the gap signal for the reflected beam 19' and the amplitude GS(-1) of the reflected beam 20', and a denominator that is the sum of the amplitude GS(+1) of the gap signal for the radiation beam 19' and the amplitude GS(0) of the gap signal for the reflected beam 18' and the amplitude GS(-1) of the gap signal for the reflected beam 20'. The normalized inclination signal $\alpha'$ is then calculated as:

$$\alpha' = ((\gamma * GS(+1) - GS(0)) + (GS(0) - \gamma * GS(-1)))/(GS(+1) + GS(0) + GS(-1))$$

The normalized inclination signal $\alpha'$ determined is a direct measure for the tangential tilt angle $\alpha$ between the lens element 11 and the recording medium 13. It may be noted that the normalization can be done by division with the amplitude of the gap signal of only one, two or all three orders. That means that the denominator for the calculation of $\alpha'$ can also consist of only one or the sum of two of the actual amplitudes GS(+1), GS(0) and GS(-1).

Further, an inclination signal $\alpha$ without normalization can be determined as a difference of the amplitudes of two different gap signals. For example, the inclination signal $\alpha$ can be determined as a difference of the amplitude GS (+1) for the reflected beam 19' and the amplitude GS(-1) of the reflected beam 20'. The control unit 30 can then be arranged to control the moving mechanism 31, 36 so as to minimize the inclination signal $\alpha'$. In this case, normalization of the inclination signal $\alpha'$ is omitted. Hence, the computational burden is reduced. The inclination signal $\alpha'$ is then not necessarily a measure for the inclination angle $\alpha$, as shown in Fig. 4, in a specific physical unit.

The spots 50, 51, 52, as shown in Fig. 3, are located at least nearly on the actual track 45. That means that the radiation beam 18 is focused at least nearly on the actual track 45, when the storage medium 13 is present and the lens element 11 is located sufficiently close to the storage medium 13. The lens element 11 is sufficiently close to the storage medium 13, when the distance 21 lies within the evanescent decay distance of at least a part of the focused electromagnetic field. Also, the radiation beam 19 and the radiation beam 20 are focused on the actual track 45, respectively. Further radiation beams are focused onto the storage medium 13. This results in a spot 56 and a spot 57, which are located besides the actual track 45. The spots 57, 51, 56 are arranged at least nearly in a line that is orientated in a radial direction 58 of the storage medium 14. The inclination determination unit 26 determines from the reflected beams corresponding to the spots 56, 57 further distance values to calculate a radial tilt angle $\beta$. Therefore, the beam intensity unit 25 comprises two further detector elements. The determination of a radial inclination signal $\beta'$ is similar to that of the tangential inclination signal $\alpha'$.

The inclination signals $\alpha'$ and $\beta'$ for tilt with respect to two mutually perpendicular axis can be used in a control loop in combination with suitable mechanical actuation means for adjusting the lens tilt of the lens element 12 with respect to the storage medium 13 or vice versa can then be used to maintain a constant and parallel air gap between the lens element 11 and the storage medium 13. It is possible to adjust the tilt of the lens assembly by using, for example, a 3- or 4-axis actuator or by tilting the rotating shaft 37. Since an actuator has a higher bandwidth than a system to tilt the rotating shaft 37 or the entire disc motor, this approach can be faster. The tilt range for the lens assembly is, in general, limited, because tilting the lens element 11 means tilting with respect to the optical axis so that in case of too large tilt angles, the gap signal used for the control unit 30 will collapse, and the read signal quality will deteriorate. In

EP 1 905 024 B1

such a case, a larger (and constant) tilt correction is performed by tilting the rotating shaft 37 with tilt mechanism 36, and smaller (and time dependent) tilt corrections are performed by tilting the lens assembly comprising the converging lens 10 and the lens element 11 with the tilt mechanism 35.

The light path direction element 7 (Fig. 1) directs the radiation beam 18 to a first position 47, the radiation beam 20 to a second position 48, and the radiation beam 19 to a third position 49. The radiation beam 18 is reflected at the gap as the first reflected beam 18' so as to sense the distance 40 of the gap between the front surface 12 of the lens element 11 and the surface 14 of the storage medium 13 at the position 47. The radiation beam 20 is reflected at the gap as the second reflected beam 20' so as to sense the distance 39 of the gap between the front surface 12 of the lens element 11 and the surface 14 of the storage medium 13 at the position 47, and the radiation beam 19 is reflected at the gap as the third reflected beam 19' so as to sense the distance 41 of the gap between the front surface 12 of the lens element 11 and the surface 14 of the storage medium 13 at the position 47. Thereby, the light path direction element 7 directs those radiation beams 18, 19, 20 in such directions that the radiation beams 18, 19, 20 directed towards the positions 47, 48, 49 produce spots 50, 51, 52 on the surface 14 of said storage medium 13 that are arranged in a straight line. Hence, the inclination angle $\alpha$ in the tangential direction 53 can be determined.

When the radiation beam 19 or a further radiation beam is directed to a position so that the radiation beam 19 or the further radiation beam produces the spot 56 on the surface 14 of the storage medium 13, then also he inclination angle $\beta$ in the radial direction 58 can be determined.

Alternatively, the light path direction element 7 can direct the radiation beam 5 towards two or more, especially three positions 47, 48, 49, alternately. At the first position 47 of the gap, the radiation beam 5 is reflected as the reflected beam 18' so as to sense the first distance 40 of the gap between the front surface 12 of the lens element 11 and the surface 14 of the storage medium 13. At the second position 48 of the gap, the radiation beam 5 is reflected as the second reflected beam 20' so as to sense the second distance 39 of the gap between the front surface 12 of the lens element 11 and the surface 14 of the storage medium 13, and at the third position 49 of the gap, the radiation beam 5 is reflected as the third reflected beam 19' so as to sense the third distance 41 of the gap between the front surface 12 of the lens element 11 and the surface 14 of the storage medium 13. The light path direction element 7 directs the radiation beam 5 in such directions that the radiation beam 5 directed towards the positions 47, 48, 49 by turn produces the spots 51, 50, 52 on the surface 14 of said storage medium 13 that are arranged in a straight line. Hence, the inclination angle $\alpha$ in the tangential direction 53 can be determined.

When the radiation beam 5 is directed to a position so that it produces the spot 56 on the surface 14 of the storage medium 13, then also he inclination angle $\beta$ in the radial direction 58 can be determined.

It is to be noted that the spots 50, 51, 52, 56, 57 or, depending on the application, some of those spots are produced, when a storage medium 13 is present and the lens element 11 is located sufficiently close to the storage medium 13.

Further it may be noted that the numbering of first, second and third is only made as an illustration, and that various arrangements with two or more positions 47, 48, 49, at which the gap distances 39, 40, 41 are measured can be used to determine the inclination in at least on direction. The counting first, second and third, as used in the claims, is not limited to the counting used in this embodiment.

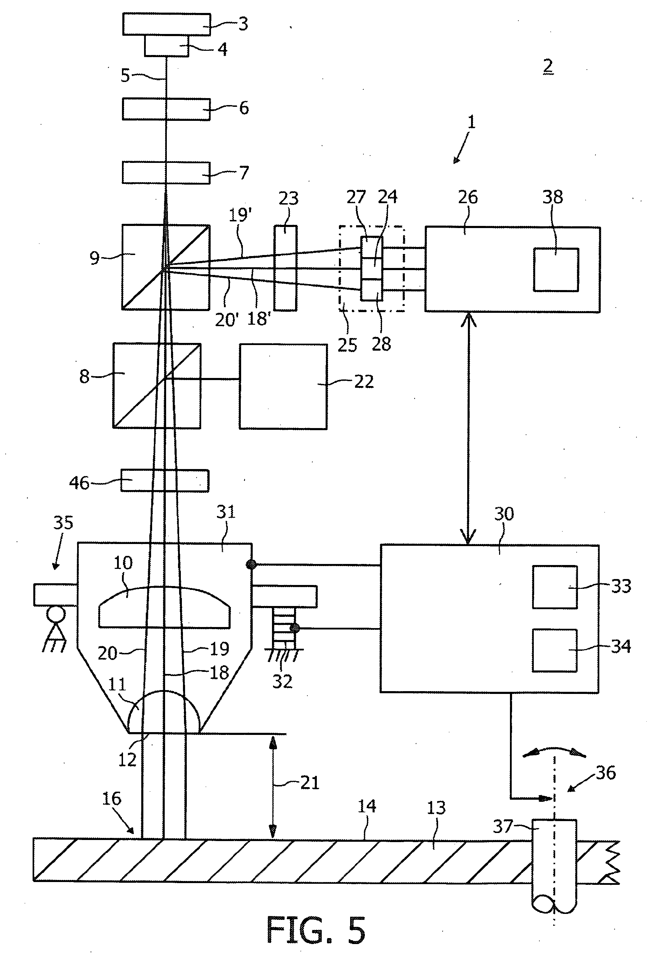

Fig. 5 shows an optical pick-up and/or recording device 1 according to a second embodiment of the present invention. In the optical pick-up and/or recording device 1 of the second embodiment, the radiation emitting element 3 is also adapted to output a radiation beam 5 having a linear polarization state. In difference to the first embodiment, the radiation beams 18, 19, 20 pass through at least a quarter wave plate 46, wherein the quarter wave plate 46 is arranged in the light path of the radiation beams 18, 19, 20 between the beam splitter 8 and the converging lens 10. The quarter wave plate 46 changes the polarization of each of the radiation beams 18, 19, 20 from the linear state to a circular state. The radiation beams 18, 19, 20 of circular polarization are then used to illuminate the converging lens 10 and the lens element 11. The reflected radiation beams reflected by frustrated total internal reflection also pass through the quarter wave plate 46. Hence, each of the reflected radiation beams comprises a component 18', 19', 20', respectively, with a polarization state parallel to that of the initial polarization state of the radiation beam 5. Compared with the first embodiment, the optical pick-up and/or recording device 1 according to the second embodiment has the advantage that the radiation beam carrying the read-out signal has at least nearly the double intensity.

Although an exemplary embodiment of the invention has been disclosed, it will be apparent to those skilled in the art that various changes and modifications can be made which will achieve some of the advantages of the invention without departing from the scope of the invention. Such modifications to the inventive concept are intended to be covered by the appended claims in which the reference signs shall not be construed as limiting the scope of the invention. Further, in the description and the appended claims the meaning of "comprising" is not to be understood as excluding other elements or steps. Further, "a" or "an" does not exclude a plurality, and a single processor or other unit may fulfill the functions of several means recited in the claims. Also, the wavelength of the radiation beams is not limited to the visible spectrum.

**Claims**

1. Optical pick-up and/or recording device (1), which optical pick-up and/or recording device comprises at least a lens element (11) adapted to focus at least two radiation beams on a storage medium (13), a moving mechanism (31, 36) adapted to vary an inclination of a front surface (12) of said lens element (11) relative to a surface (14) of said storage medium (13), a beam intensity measuring unit (25) adapted to measure at least indirectly an intensity of a first reflected radiation beam reflected at a gap between said lens element (11) and said storage medium (13) by frustrated total internal reflection, an inclination determination unit (26) adapted to determine an inclination between said front surface (12) of said lens element (11) and said surface (14) of said storage medium (13) on the basis of said intensity of said first reflected radiation beam measured by said beam intensity measuring unit (25), a control unit (30) adapted to control said moving mechanism on the basis of said inclination between said first front surface (12) of said lens element (11) and said surface (14) of said storage medium (13) determined by said inclination determination unit (26) so that said front surface (12) of said lens element (11) is aligned with respect to said surface (14) of said storage medium (13), **characterized in that** said beam intensity measuring unit (25) being further adapted to measure at least indirectly an intensity of at least a second reflected radiation beam reflected at said gap between said lens element (11) and said storage medium (13) by frustrated total internal reflection and said inclination determination unit (26) being further adapted to determine an inclination between said front surface (12) of said lens element (11) and said surface (14) of said storage medium (13) on the basis of said intensity of said second reflected radiation beam measured by said beam intensity measuring unit (25).

2. Optical pick-up and/or recording device according to claim 1, wherein said control unit (30) is adapted to control said moving mechanism so that said lens element (11) is aligned with respect to said surface (14) of said storage medium (13) with respect to at least a direction of said storage medium (13).

3. Optical pick-up and/or recording device according to claim 1, wherein said control unit (30) is adapted to control said moving mechanism so that said lens element (11) is aligned parallel to said surface (14) of said storage medium (13) with respect to at least one direction.

4. Optical pick-up and/or recording device according to claim 2 or 3, wherein said control unit (30) is adapted to control said moving mechanism so that said lens element (11) is aligned with respect to a tangential direction (53) of said storage medium (13).

5. Optical pick-up and/or recording device according to claim 2 or 3, wherein said control unit (30) is adapted to control said moving mechanism so that said lens element (11) is aligned with respect to a radial direction (58) of said storage medium (13).

6. Optical pick-up and/or recording device according to one of claims 2 to 5, wherein said beam intensity measuring unit (25) is adapted to measure at least indirectly an intensity of a third reflected radiation beam reflected at said gap between said lens element (11) and said storage medium (13) by frustrated total internal reflection, that said inclination determination unit (26) is adapted to determine said inclination between said front surface (12) of said lens element (11) and said surface (14) of said storage medium (13) also on the basis of said intensity of said third reflected radiation beam measured by said beam intensity measuring unit (25).

7. Optical pick-up and/or recording device according to claim 6, wherein said control unit (30) is adapted to control said moving mechanism so that said lens element (11) is aligned parallel to said surface (14) of said storage medium (13) with respect to a tangential direction (53) of said storage medium (13) and a radial direction (58) of said storage medium (13).

8. Optical pick-up and/or recording device according to claim 1, wherein said beam intensity measuring unit (25) is adapted to measure said intensity of said first reflected radiation beam separately and to measure said intensity of said second reflected radiation beam separately.

9. Optical pick-up and/or recording device according to claim 8, wherein said beam intensity measuring unit (25) comprises a first detector element and at least a second detector element, wherein said first detector element is arranged to detect said intensity of said first reflected radiation beam and said second detector element is arranged to detect said intensity of said second reflected radiation beam.

10. Optical pick-up and/or recording device according to claim 1, wherein said inclination determination unit (26) comprises a standard gap signal storage medium (38) adapted to provide at least a few values of a standard gap signal showing a dependency of an intensity of a reflected radiation beam reflected at said gap from a gap distance, and that said inclination determination unit (26) determines said inclination with use of said values of said standard gap signal.

11. Optical pick-up and/or recording device according to claim 1, wherein said inclination determination unit (26) is adapted to generate at least an inclination signal ($\alpha'$, $\beta'$), wherein a higher absolute value of an amount of said inclination signal corresponds to a greater absolute value of an inclination angle between said front surface (12) of said lens element (11) and said surface (14) of said storage medium.

12. Optical pick-up and/or recording device according to claim 11, wherein said control unit (30) is adapted to control said moving mechanism on the basis of said inclination signal so that an absolute value of an amount of said inclination signal is minimized.

13. Optical pick-up and/or recording device according to claim 1, wherein a light path direction element (7) adapted to direct said radiation beam to a first position so that said radiation beam is reflected at said gap as said first reflected radiation beam so as to sense a distance of said gap between said lens element (11) and said storage medium (13) at said position, and adapted to direct at least a further radiation beam to a second position so that said further beam is reflected at said gap as said second reflected radiation beam so as to sense a further distance of said gap between said lens element (11) and said storage medium (13) at said further position.

14. Optical pick-up and/or recording device according to claim 13, wherein said light path direction element (7) is adapted to direct at least a third radiation beam to a third position so that said third radiation beam is reflected at said gap as a third reflected radiation beam so as to sense a third distance of said gap between said lens element (11) and said storage medium (13) at said third position.

15. Optical pick-up and/or recording device according to claim 14, wherein said light path direction element (7) is adapted to direct said radiation beams in such directions that said radiation beams directed towards said positions produce spots (50, 51, 56) on said surface (14) of said storage medium (13) that are not arranged in a straight line, when said storage medium (13) is present and is located sufficiently close to said lens element (11), so as to enable said alignment with respect to two different directions.

16. Optical pick-up and/or recording device according to claim 15, wherein at least one (50, 51) of said spots (50, 51, 56) is at least nearly located on an actual track (45) of said storage medium (13) and that at least another (56) of said spots (50 51, 56) is located besides said actual track (45), when said storage medium (13) is present and is located sufficiently close to said lens element (11).

17. Optical pick-up and/or recording device according to claim 16, wherein at least two (50, 51) of said spots (50, 51, 56) are at least nearly located on an actual track (45) of said storage medium (13), when said storage medium (13) is present and is located sufficiently close to said lens element (11).

18. Optical pick-up and/or recording device according to claim 1, wherein a light path direction element (7) adapted to direct said radiation beam (5) to a first position so that said radiation beam is reflected at said gap as said first reflected radiation beam so as to sense a first distance of said gap between said lens element (11) and said storage medium (13) at said first position and to at least a second position so that said radiation beam (5) is reflected at said gap as said second reflected radiation beam so as to sense a second distance of said gap between said lens element (11) and said storage medium (13) at said second position.

19. Optical pick-up and/or recording device according to claim 18, wherein said light path direction element (7) is adapted to direct said radiation beam (5) to at least a third position so that said radiation beam (5) is reflected at said gap as a third reflected radiation beam so as to sense a third distance of said gap between said lens element (11) and said storage medium (13) at said third position.

20. Optical pick-up and/or recording device according to claim 19, wherein said light path direction element (7) is adapted to direct said radiation beam (5) in such directions that said radiation beam (5) directed towards said positions produce spots (50, 51, 56) on said surface (14) of said storage medium (13) that are not arranged in a straight line, when said storage medium (13) is present and is located sufficiently close to said lens element (11), so as to enable said alignment with respect to two different directions.

21. Optical pick-up and/or recording device according to claim 20, wherein at least one (50, 51) of said spots (50, 51, 56) is at least nearly located on an actual track (45) of said storage medium (13) and that at least another (56) of said spots (50 51, 56) is located besides said actual track (45), when said storage medium (13) is present and is located sufficiently close to said lens element (11).

22. Optical pick-up and/or recording device according to claim 21, wherein at least two (50, 51) of said spots (50, 51, 56) are at least nearly located on an actual track (45) of said storage medium (13), when said storage medium (13) is present and is located sufficiently close to said lens element (11).

**Patentansprüche**

1. Optische Aufnahme- und/oder Aufzeichnungsanordnung (1) wobei diese Anordnung wenigstens Folgendes umfasst: ein Linsenelement (11), vorgesehen zum Fokussieren wenigstens zweier Strahlungsbündel auf ein Speichermedium (13), einen Verlagerungsmechanismus (31, 36), vorgesehen zum Variieren einer Schiefe einer Vorderfläche (12) des genannten Linsenelementes (11) gegenüber einer Oberfläche (14) des genannten Speichermediums (13), eine Strahlungsbündelintensitätsmesseinheit (25), vorgesehen zum wenigstens indirekten Messen der Intensität eines ersten an einem Spalt zwischen dem genannten Linsenelement (11) und dem genannten Speichermedium (13) reflektierten Strahlungsbündels durch gescheiterte totale interne Reflexion, eine Schiefenermittlungseinheit (26), vorgesehen zum Ermitteln einer Schiefe zwischen der genannten Vorderfläche (12) des genannten Linsenelementes (11) und der genannten Oberfläche (14) des genannten Speichermediums (13), und zwar auf Basis der genannten Intensität des genannten ersten reflektierten Strahlungsbündels, gemessen durch die genannte Strahlungsbündelintensitätsmesseinheit (25), eine Steuereinheit (30), vorgesehen zur Steuerung des genannten Verlagerungsmechanismus, und zwar auf Basis der genannten Schiefe zwischen der genannten ersten Vorderfläche (12) des genannten Linsenelementes (11) und der genannten Oberfläche (14) des genannten Speichermediums (13), ermittelt durch die genannte Schiefenermittlungseinheit (26), so dass die genannte Vorderfläche (12) des genannten Linsenelementes (11) gegenüber der genannten Oberfläche )14) des genannten Speichermediums (13) ausgerichtet wird, **dadurch gekennzeichnet, dass** die genannte Strahlungsbündelintensitätsmesseinheit (25) weiterhin zum wenigstens indirekten Messen der Intensität wenigstens eines zweiten an dem genannten Spalt zwischen dem genannten Linsenelement (11) und dem genannten Speichermedium (13) reflektierten Strahlungsbündels vorgesehen ist, und zwar durch die gescheiterte totale interne Reflexion, und dass die genannte Schiefenermittlungseinheit (26) weiterhin zum Ermitteln einer Schiefe zwischen der genannten Vorderfläche (12) des genannten Linsenelementes (11) und der genannten Oberfläche (14) des genannten Speichermediums (13) vorgesehen ist, und zwar auf Basis der genannten Intensität des genannten zweiten reflektierten Strahlungsbündels, gemessen durch die genannte Strahlungsbündelintensitätsmesseinheit (25).

2. Optische Aufnahme- und/oder Aufzeichnungsanordnung nach Anspruch 1, wobei die genannte Steuereinheit (30) zur Steuerung des genannten Verlagerungsmechanismus vorgesehen ist, so dass das genannte Linsenelement (11) gegenüber der genannten Oberfläche (14) des genannten Speichermediums (13) in wenigstens einer Richtung des genannten Speichermediums (13) ausgerichtet wird.

3. Optische Aufnahme- und/oder Aufzeichnungsanordnung nach Anspruch 1, wobei die genannte Steuereinheit (30) zur Steuerung des genannten Verlagerungsmechanismus vorgesehen ist, so dass das genannten Linsenelement (11) parallel zu der genannten Oberfläche (14) des genannten Speichermediums (13) in wenigstens einer Richtung ausgerichtet wird.

4. Optische Aufnahme- und/oder Aufzeichnungsanordnung nach Anspruch 2 oder 3, wobei die genannte Steuereinheit (30) zur Steuerung des genannten Verlagerungsmechanismus vorgesehen ist, so dass das genannte Linsenelement (11) in einer tangentialen Richtung (53) des genannten Speichermediums (13) ausgerichtet wird.

5. Optische Aufnahme- und/oder Aufzeichnungsanordnung nach Anspruch 2 oder 3, wobei die genannte Steuereinheit (30) zur Steuerung des genannten Verlagerungsmechanismus vorgesehen ist, so dass das genannte Linsenelement (11) in einer radialen Richtung (58) des genannten Speichermediums (13) ausgerichtet wird.

6. Optische Aufnahme- und/oder Aufzeichnungsanordnung nach Anspruch 2 bis 5, wobei die genannte Strahlungsbündelintensitätsmesseinheit (25) zum wenigstens indirekten Messen der Intensität eines dritten an dem genannten Spalt zwischen dem genannten Linsenelement (11) und dem genannten Speichermedium (13) reflektierten Strahlungsbündels vorgesehen ist, und zwar durch gescheiterte totale innere Reflexion, wobei die genannte Schiefen-

ermittlungeinheit (26) zum Ermitteln der genannten Schiefe zwischen der genannten Vorderfläche (12) des genannten Linsenelementes (11) und der genannten Oberfläche (14) des genannten Speicherelementes vorgesehen ist, ebenfalls auf Basis der genannten Intensität des genannten dritten reflektierten Strahlungsbündels, gemessen durch die Strahlungsbündelintensitätsmesseinheit (25).

7. Optische Aufnahme- und/oder Aufzeichnungsanordnung nach Anspruch 6, wobei die genannte Steuereinheit (30) zur Steuerung des genannten Verlagerungsmechanismus vorgesehen ist, so dass das genannte Linsenelement (11) parallel zu der genannten Oberfläche (14) des genannten Speichermediums (13) in einer tangentialen Richtung (53) des genannten Speichermediums (13) und in einer radialen Richtung (58) des genannten Speichermediums (13) ausgerichtet wird.

8. Optische Aufnahme- und/oder Aufzeichnungsanordnung nach Anspruch 1, wobei die genannte Strahlungsbündelintensitätsmesseinheit (25) zum separaten Messen der genannten Intensität des genannten ersten reflektierten Strahlungsbündels und zum separaten Messen der genannten Intensität des genannten zweiten reflektierten Strahlungsbündels vorgesehen ist.

9. Optische Aufnahme- und/oder Aufzeichnungsanordnung nach Anspruch 8, wobei die genannte Strahlungsbündelintensitätsmesseinheit (25) ein erstes Detektorelement und wenigstens ein zweites Detektorelement umfasst, wobei das genannte erste Detektorelement zum Detektieren der genannten Intensität des genannten ersten reflektierten Strahlungsbündels vorgesehen ist und das genannte zweite Detektorelement zum Detektieren der genannten Intensität des genannten zweiten reflektierten Strahlungsbündels vorgesehen ist.

10. Optische Aufnahme- und/oder Aufzeichnungsanordnung nach Anspruch 1, wobei die genannte Schiefenermittlungseinheit (26) ein Speichermedium (38) für ein Standardspaltsignal aufweist, vorgesehen zum Schaffen wenigstens einiger Werte eines Standardspaltsignals, die eine Abhängigkeit einer Intensität eines an dem genannten Spalt reflektierten Strahlungsbündels von einem Spaltabstand zeigen, und wobei die genannte Schiefenermittlungseinheit (26) unter Anwendung der genannten Werte des genannten Standardspaltsignals die genannte Schiefe ermittelt.

11. Optische Aufnahme- und/oder Aufzeichnungsanordnung nach Anspruch 1, wobei die genannte Schiefenermittlungseinheit (26) zum Erzeugen wenigstens eines Schiefensignals ($\alpha'$, $\beta'$), wobei ein höherer Absolutwert eines Betrags des genannten Schiefensignals einem größeren Absolutwert eines Schiefenwinkels zwischen der Vorderfläche (12) des genannten Linsenelementes (11) und der genannten Oberfläche (14) des genannten Speichermediums entspricht.

12. Optische Aufnahme- und/oder Aufzeichnungsanordnung nach Anspruch 11, wobei die Steuereinheit (30) zur Steuerung des genannten Verlagerungsmechanismus vorgesehen ist, und zwar auf Basis des genannten Schiefensignals, so dass ein Absolutwert eines Betrags des genannten Schiefensignals minimiert wird.

13. Optische Aufnahme- und/oder Aufzeichnungsanordnung nach Anspruch 1, wobei ein Lichtstreckenrichtelement (7) zum Ausrichten des genannten Strahlungsbündels auf eine erste Position vorgesehen ist, so dass das genannte Strahlungsbündel an dem genannten Spalt als das genannte erste reflektierte Strahlungsbündel reflektiert wird um den Abstand des genannten Spaltes zwischen dem genannten Linsenelement (11) und dem genannten Speichermedium (13) an der genannten Stelle zu ermitteln, und zum Ausrichten wenigstens eines weiteren Strahlungsbündels auf eine zweite Position vorgesehen ist, so dass das genannte weitere Bündel als das genannte zweite reflektierte Strahlungsbündel an dem genannten Spalt reflektiert wird, um einen weiteren Abstand des genannten Spaltes zwischen dem genannten Linsenelement (11) und dem genannten Speichermedium (13) an der genannten weiteren Stelle zu ermitteln.

14. Optische Aufnahme- und/oder Aufzeichnungsanordnung nach Anspruch 13, wobei das genannte Lichtstreckenrichtelement (7) zum Ausrichten wenigstens eines dritten Strahlungsbündels auf eine dritte Position vorgesehen ist, so dass das genannte dritte Strahlungsbündel als ein drittes reflektiertes Strahlungsbündel an dem genannten Spalt reflektiert wird um einen dritten Abstand des genannten Spaltes zwischen dem genannten Linsenelement (11) und dem genannten Speichermedium (13) an der genannten dritten Stelle zu ermitteln.

15. Optische Aufnahme- und/oder Aufzeichnungsanordnung nach Anspruch 14, wobei das genannte Lichtstreckenrichtelement (7) zum Ausrichten der genannten Strahlungsbündel in solchen Richtungen vorgesehen ist, dass die genannten auf die genannten Stellen gerichteten Strahlungsbündel Punkte (50, 51, 56) auf der genannten Oberfläche (14) des genannten Speichermediums (13) bilden, die nicht fluchtend liegen, wenn das genannte Speichermedium (13) vorhanden ist und nahe genug an dem genannten Linsenelement (11) anliegt, damit die genannte Ausrichtung in zwei verschiedenen Richtungen ermöglicht wird.

16. Optische Aufnahme- und/oder Aufzeichnungsanordnung nach Anspruch 15, wobei wenigstens ein Punkt (50, 51) der genannten Punkte (50, 51, 56) wenigstens nahe an einer richtigen Spur (45) des genannten Speichermediums (13) liegt und wobei wenigstens ein anderer Punkt (56) der genannten Punkte (50, 51, 56) neben der genannten richtigen Spur (45) liegt, wenn das genannte Speichermedium (13) vorhanden ist und nahe genug an dem genannten Linsenelement (11) anliegt.

17. Optische Aufnahme- und/oder Aufzeichnungsanordnung nach Anspruch 16, wobei wenigstens zwei Punkte (50, 51) der genannten Punkte (50, 51, 56) wenigstens nahezu auf einer richtigen Spur (45) des genannten Speichermediums (13) liegen, wenn das genannte Speichermedium (13) vorhanden ist und nahe genug an dem genannten Linsenelement (11) anliegt.

18. Optische Aufnahme- und/oder Aufzeichnungsanordnung nach Anspruch 1, wobei ein Lichtstreckenrichtelement (7) zum Ausrichten des genannten Strahlungselementes (5) auf eine erste Position, so dass das genannte Strahlungsbündel als das genannte erste reflektierte Strahlungsbündel an dem genannten Spalt reflektiert wird, um einen ersten Abstand des genannten Spaltes zwischen dem genannten Linsenelement (11) und dem genannten Speichermedium (13) an der genannten Stelle zu ermitteln und auf wenigstens eine zweite Position, so dass das genannte Strahlungsbündel (5) als das genannte zweite reflektierte Strahlungsbündel an dem genannten Spalt reflektiert wird, um einen zweiten Abstand des genannten Spaltes zwischen dem genannten Linsenelement (11) und dem genannten Speichermedium (13) an der genannten Stelle zu ermitteln.

19. Optische Aufnahme- und/oder Aufzeichnungsanordnung nach Anspruch 18, wobei das genannte Lichtstreckenrichtelement (7) zum Ausrichten des genannten Strahlungsbündels (5) auf wenigstens eine dritte Position vorgesehen ist, so dass das genannte Strahlungsbündel (5) als ein drittes reflektiertes Strahlungsbündel an dem genannten Spalt reflektiert wird um einen dritten Abstand des genannten Spaltes zwischen dem Linsenelement (11) und dem genannten Speichermedium (13) an der genannten dritten Stelle zu ermitteln.

20. Optische Aufnahme- und/oder Aufzeichnungsanordnung nach Anspruch 19, wobei das genannte Lichtstreckenrichtelement (7) zum Ausrichten des genannten Strahlungsbündels (5) in solchen Richtungen vorgesehen ist, dass das genannte auf die genannten Positionen gerichtete Strahlungsbündel (5) Punkte (50, 51, 56) auf der genannten Oberfläche (14) des genannten Speichermediums (13) erzeugt, die nicht fluchtend liegen, wenn das genannte Speichermedium (13) vorhanden ist und nahe genug an dem genannten Linsenelement (11) anliegt, damit die Ausrichtung in zwei verschiedenen Richtungen ermöglicht wird.

21. Optische Aufnahme- und/oder Aufzeichnungsanordnung nach Anspruch 20, wobei wenigstens ein Punkt (50, 51) der genannten Punkte (50, 51, 56) wenigstens nahezu auf einer wirklichen Spur (45) des genannten Speichermediums (13) liegt und wenigstens ein anderer Punkt (56) der genannten Punkte (50, 51, 56) neben der genannten wirklichen Spur (45) liegt, wenn das genannte Speichermedium (13) vorhanden ist und nahe genug an dem genannten Linsenelement (11) anliegt.

22. Optische Aufnahme- und/oder Aufzeichnungsanordnung nach Anspruch 21, wobei wenigstens zwei Punkte (50, 51) der genannten Punkte (50, 51, 56) wenigstens nahezu auf einer wirklichen Spur (45) des genannten Speichermediums (13) liegen, wenn das genannte Speichermedium (13) vorhanden ist und nahe genug an dem genannten Linsenelement (11) anliegt.

**Revendications**

1. Dispositif de lecture et/ou d'enregistrement optique (1), lequel dispositif de lecture et/ou d'enregistrement optique comprend au moins un élément lenticulaire (11) à même de focaliser au moins deux faisceaux de rayonnement sur un support de mémorisation (13), un mécanisme mobile (31, 36) à même de varier une inclinaison d'une surface avant (12) dudit élément lenticulaire (11) par rapport à une surface (14) dudit support de mémorisation (13), une unité de mesure d'intensité de faisceau (25) à même de mesurer au moins indirectement une intensité d'un premier faisceau de rayonnement réfléchi, réfléchi au niveau d'un espace entre ledit élément lenticulaire (11) et ledit support de mémorisation (13) par réflexion interne totale frustrée, une unité de détermination d'inclinaison (26) à même de déterminer une inclinaison entre ladite surface avant (12) dudit élément lenticulaire (11) et ladite surface (14) dudit support de mémorisation (13) sur la base de ladite intensité dudit premier faisceau de rayonnement réfléchi mesurée par ladite unité de mesure d'intensité de faisceau (25), une unité de commande (30) à même de commander ledit mécanisme mobile sur la base de ladite inclinaison entre ladite première surface avant (12) dudit élément lenticulaire (11) et ladite surface (14) dudit support de mémorisation (13) déterminée par ladite unité de détermination d'inclinaison (26) de sorte que ladite surface avant (12) dudit élément lenticulaire (11) est alignée par rapport à ladite surface (14) dudit support de mémorisation (13), **caractérisé en ce que** ladite unité de mesure d'intensité de faisceau (25) est en outre à même de mesurer au moins indirectement une intensité d'au moins un deuxième faisceau de rayonnement réfléchi, réfléchi au niveau dudit espace entre ledit élément lenticulaire (11) et ledit support de mémorisation (13) par réflexion interne totale frustrée et ladite unité de détermination d'inclinaison (26) est en outre à même de déterminer une inclinaison entre ladite surface avant (12) dudit élément lenticulaire (11) et ladite surface (14) dudit support de mémorisation (13) sur la base de ladite intensité dudit deuxième faisceau de rayonnement réfléchi mesurée par ladite unité de mesure d'intensité de faisceau (25).

2. Dispositif de lecture et/ou d'enregistrement optique suivant la revendication 1, dans lequel ladite unité de commande (30) est à même de commander ledit mécanisme mobile de sorte que ledit élément lenticulaire (11) est aligné par rapport à ladite surface (14) dudit support de mémorisation (13) par rapport à au moins une direction dudit support de mémorisation (13).

3. Dispositif de lecture et/ou d'enregistrement optique suivant la revendication 1, dans lequel ladite unité de commande (30) est à même de commander ledit mécanisme mobile de sorte que ledit élément lenticulaire (11) est aligné parallèlement à ladite surface (14) dudit support de mémorisation (13) par rapport à au moins une direction.

4. Dispositif de lecture et/ou d'enregistrement optique suivant la revendication 2 ou 3, dans lequel ladite unité de commande (30) est à même de commander ledit mécanisme mobile de sorte que ledit élément lenticulaire (11) est aligné par rapport à une direction tangentielle (53) dudit support de mémorisation (13).

5. Dispositif de lecture et/ou d'enregistrement optique suivant la revendication 2 ou 3, dans lequel ladite unité de commande (30) est à même de commander ledit mécanisme mobile de sorte que ledit élément lenticulaire (11) est aligné par rapport à une direction radiale (58) dudit support de mémorisation (13).

6. Dispositif de lecture et/ou d'enregistrement optique suivant l'une quelconque des revendications 2 à 5, dans lequel ladite unité de mesure d'intensité de faisceau (25) est à même de mesurer au moins indirectement une intensité d'un troisième faisceau de rayonnement réfléchi, réfléchi au niveau dudit espace entre ledit élément lenticulaire (11) et ledit support de mémorisation (13) par réflexion interne totale frustrée, dans lequel ladite unité de détermination d'inclinaison (26) est à même de déterminer ladite inclinaison entre ladite surface avant (12) dudit élément lenticulaire (11) et ladite surface (14) dudit support de mémorisation (13) également sur la base de ladite intensité dudit troisième faisceau de rayonnement réfléchi mesurée par ladite unité de mesure d'intensité de faisceau (25).

7. Dispositif de lecture et/ou d'enregistrement optique suivant la revendication 6, dans lequel ladite unité de commande (30) est à même de commander ledit mécanisme mobile de sorte que ledit élément lenticulaire (11) est aligné parallèlement à ladite surface (14) dudit support de mémorisation (13) par rapport à une direction tangentielle (53) dudit support de mémorisation (13) et à une direction radiale (58) dudit support de mémorisation (13).

8. Dispositif de lecture et/ou d'enregistrement optique suivant la revendication 1, dans lequel ladite unité de mesure d'intensité de faisceau (25) est à même de mesurer séparément ladite intensité dudit premier faisceau de rayonnement réfléchi et de mesurer séparément ladite intensité dudit deuxième faisceau de rayonnement réfléchi.

9. Dispositif de lecture et/ou d'enregistrement optique suivant la revendication 8, dans lequel ladite unité de mesure d'intensité de faisceau (25) comprend un premier élément de détection et au moins un deuxième élément de détection, dans lequel ledit premier élément de détection est à même de détecter ladite intensité dudit premier faisceau de rayonnement réfléchi et ledit deuxième élément de détection est à même de détecter ladite intensité dudit deuxième faisceau de rayonnement réfléchi.

10. Dispositif de lecture et/ou d'enregistrement optique suivant la revendication 1, dans lequel ladite unité de détermination d'inclinaison (26) comprend un support de mémorisation de signal d'espace standard (38) à même de fournir au moins quelques valeurs d'un signal d'espace standard montrant une dépendance d'une intensité d'un faisceau de rayonnement réfléchi, réfléchi au niveau dudit espace depuis une distance d'espace, et **caractérisé en ce que** ladite unité de détermination d'inclinaison (26) détermine ladite inclinaison à l'aide desdites valeurs dudit signal d'espace standard.

11. Dispositif de lecture et/ou d'enregistrement optique suivant la revendication 1, dans lequel ladite unité de détermination d'inclinaison (26) est à même de générer au moins un signal d'inclinaison ($\alpha'$, $\beta'$), dans lequel une valeur absolue supérieure d'une quantité dudit signal d'inclinaison correspond à une valeur absolue supérieure d'un angle d'inclinaison entre ladite surface avant (12) dudit élément lenticulaire (11) et ladite surface (14) dudit support de mémorisation.

12. Dispositif de lecture et/ou d'enregistrement optique suivant la revendication 11, dans lequel ladite unité de commande (30) est à même de commander ledit mécanisme mobile sur la base dudit signal d'inclinaison de sorte qu'une valeur absolue d'une quantité dudit signal d'inclinaison est réduite au minimum.

13. Dispositif de lecture et/ou d'enregistrement optique suivant la revendication 1, dans lequel un élément de direction de trajet de la lumière (7) est à même de diriger ledit faisceau de rayonnement vers une première position de sorte que ledit faisceau de rayonnement est réfléchi au niveau dudit espace sous la forme dudit premier faisceau de rayonnement réfléchi de manière à détecter une distance dudit espace entre ledit élément lenticulaire (11) et ledit support de mémorisation (13) dans ladite position, et à même de diriger au moins un autre faisceau de rayonnement vers une deuxième position de sorte que ledit autre faisceau est réfléchi au niveau dudit espace sous la forme dudit deuxième faisceau de rayonnement réfléchi de manière à détecter une autre distance dudit espace entre ledit élément lenticulaire (11) et ledit support de mémorisation (13) dans ladite autre position.

14. Dispositif de lecture et/ou d'enregistrement optique suivant la revendication 13, dans lequel ledit élément de direction de trajet de la lumière (7) est à même de diriger au moins un troisième faisceau de rayonnement vers une troisième position de sorte que ledit troisième faisceau de rayonnement est réfléchi au niveau dudit espace sous la forme d'un dit troisième faisceau de rayonnement réfléchi de manière à détecter une troisième distance dudit espace entre ledit élément lenticulaire (11) et ledit support de mémorisation (13) dans ladite troisième position.

15. Dispositif de lecture et/ou d'enregistrement optique suivant la revendication 14, dans lequel ledit élément de direction de trajet de la lumière (7) est à même de diriger lesdits faisceaux de rayonnement dans des directions telles que lesdits faisceaux de rayonnement dirigés vers lesdites positions produisent des points (50, 51, 56) sur ladite surface (14) dudit support de mémorisation (13) qui ne sont pas disposés en ligne droite, lorsque ledit support de mémorisation (13) est présent et se trouve suffisamment près dudit élément lenticulaire (11), de manière à permettre ledit alignement par rapport aux deux directions différentes.

16. Dispositif de lecture et/ou d'enregistrement optique suivant la revendication 15, dans lequel au moins un (50, 51) desdits points (50, 51, 56) est au moins presque situé sur une piste (45) même dudit support de mémorisation (13) et dans lequel au moins un autre (56) desdits points (50, 51, 56) se trouve à côté de ladite piste (45) même, lorsque ledit support de mémorisation (13) est présent et se trouve suffisamment près dudit élément lenticulaire (11).

17. Dispositif de lecture et/ou d'enregistrement optique suivant la revendication 16, dans lequel au moins deux (50, 51) desdits points (50, 51, 56) sont au moins presque situés sur une piste (45) même dudit support de mémorisation (13), lorsque ledit support de mémorisation (13) est présent et se trouve suffisamment près dudit élément lenticulaire (11).

18. Dispositif de lecture et/ou d'enregistrement optique suivant la revendication 1, dans lequel un élément de direction de trajet de la lumière (7) à même de diriger ledit faisceau de rayonnement (5) vers une première position de sorte que ledit faisceau de rayonnement est réfléchi au niveau dudit espace sous la forme dudit premier faisceau de rayonnement réfléchi de manière à détecter une première distance dudit espace entre ledit élément lenticulaire (11) et ledit support de mémorisation (13) dans ladite première position et vers au moins une deuxième position de sorte que ledit faisceau de rayonnement (5) est réfléchi au niveau dudit espace sous la forme dudit deuxième faisceau de rayonnement réfléchi de manière à détecter une deuxième distance dudit espace entre ledit élément lenticulaire (11) et ledit support de mémorisation (13) dans ladite deuxième position.

19. Dispositif de lecture et/ou d'enregistrement optique suivant la revendication 18, dans lequel ledit élément de direction de trajet de la lumière (7) est à même de diriger ledit faisceau de rayonnement (5) vers au moins une troisième position de sorte que ledit faisceau de rayonnement (5) est réfléchi au niveau dudit espace sous la forme d'un troisième faisceau de rayonnement réfléchi de manière à détecter une troisième distance dudit espace entre ledit élément lenticulaire (11) et ledit support de mémorisation (13) dans ladite troisième position.

20. Dispositif de lecture et/ou d'enregistrement optique suivant la revendication 19, dans lequel ledit élément de direction de trajet de la lumière (7) est à même de diriger ledit faisceau de rayonnement (5) dans des directions telles que ledit faisceau de rayonnement (5) dirigé vers lesdites positions produit des points (50, 51, 56) sur ladite surface (14) dudit support de mémorisation (13) qui ne sont pas disposés en ligne droite, lorsque ledit support de mémorisation (13) est présent et se trouve suffisamment près dudit élément lenticulaire (11), de manière à permettre ledit alignement par rapport aux deux directions différentes.

21. Dispositif de lecture et/ou d'enregistrement optique suivant la revendication 20, dans lequel au moins un (50, 51) desdits points (50, 51, 56) est au moins presque situé sur une piste (45) même dudit support de mémorisation (13) et dans lequel au moins un autre (56) desdits points (50, 51, 56) se trouve à côté de ladite piste (45) même, lorsque ledit support de mémorisation (13) est présent et se trouve suffisamment près dudit élément lenticulaire (11).

22. Dispositif de lecture et/ou d'enregistrement optique suivant la revendication 21, dans lequel au moins deux (50, 51) desdits points (50, 51, 56) sont au moins presque situés sur une piste (45) même dudit support de mémorisation (13), lorsque ledit support de mémorisation (13) est présent et se trouve suffisamment près dudit élément lenticulaire (11).

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004047271 A

**Non-patent literature cited in the description**

- **F. ZIJP et al.** *Proceedings of SPIE,* vol. 5380, 209-223